# DEMANDE DE BREVET EUROPEEN

(11) **EP 4 310 957 A1**
(43) Date de publication de la demande: **24.01.2024**
(21) Numéro de dépôt: 23187120.3
(22) Date de dépôt: 21.07.2023
(51) Int. Cl.: H01M 4/60, H01M 4/137, H01G 11/04, H01G 11/06, H01G 11/48, H01M 4/1399, H01M 4/62

(54) **ELECTRODE DE REFERENCE A BASE DE MATERIAU ORGANIQUE DE TYPE P**

(30) Priorité: 22.07.2022 FR 2207520
(71) Demandeur: Commissariat à l'énergie atomique et aux énergies alternatives, 75015 Paris (FR)
(72) Inventeur: YVENAT, Marie-Eve, 38054 Grenoble Cedex 09 (FR); CHAVILLON, Benoit, 38054 Grenoble Cedex 09 (FR); MAYOUSSE, Eric, 38054 Grenoble Cedex 09 (FR); GUTEL, Thibaut, 38054 Grenoble Cedex 09 (FR); MERCHAT, Léo, 38054 Grenoble Cedex 09 (FR)
(74) Mandataire: Cabinet Nony

(57) **Abrégé**

La présente invention concerne l'utilisation, à titre d'électrode de référence dans une cellule d'une batterie métal-ion, notamment une batterie sodium-ion, lithium-ion, potassium-ion, magnésium-ion ; une batterie lithium-soufre ou lithium-air ; ou d'un supercondensateur, en particulier d'un supercondensateur hybride au potassium, d'une électrode à base d'un ou plusieurs matériaux organiques électro-actifs de type P, dont la réaction rédox associée présente un potentiel électrochimique constant ; le ou lesdits matériaux organiques de type P étant présents sous une forme partiellement oxydée chargée positivement, avec une compensation de charge par au moins un anion.

Elle concerne également une cellule d'une batterie métal-ion, batterie lithium-soufre ou lithium-air ; ou d'un supercondensateur, en particulier d'un supercondensateur hybride au potassium, comportant trois électrodes : une électrode positive, une électrode négative et une telle électrode de référence.

## Description

### Domaine technique

La présente invention concerne le domaine des systèmes de stockage électrochimique, plus précisément le domaine des dispositifs électrochimiques de type accumulateurs ou batteries métal-ion, notamment des batteries sodium-ion, lithium-ion, potassium-ion, magnésium-ion ; des batteries lithium-soufre ou lithium-air ; et supercondensateurs, par exemple des supercondensateurs hybrides au potassium.

Elle vise plus précisément la mise en oeuvre d'une électrode à base d'un ou plusieurs matériaux actifs organiques de type donneurs d'électrons, dits encore de type P, présents sous une forme partiellement oxydée chargée positivement, avec compensation des charges positives par au moins un anion, comme électrode de référence dans une cellule dudit système de stockage électrochimique.

### Technique antérieure

Les dispositifs électrochimiques de type batteries, par exemple batteries au lithium, et supercondensateurs, trouvent de multiples applications, notamment dans l'alimentation des systèmes embarqués de faible épaisseur, comme les cartes de crédit, les étiquettes intelligentes, dans l'alimentation des téléphones mobiles, le stockage de l'énergie de cellules photovoltaïques, ou encore dans l'alimentation des véhicules électriques.

Divers systèmes de stockage électrochimiques ou générateurs électrochimiques ont été développés, telles que des batteries métal-ion, notamment des batteries sodium-ion, lithium-ion, potassium-ion, magnésium-ion ; des batteries lithium-soufre ou lithium-air ; et plus récemment des supercondensateurs.

Ces générateurs électrochimiques, par exemple au lithium, fonctionnent classiquement sur le principe d'insertion et désinsertion (ou intercalation-désintercalation) d'un métal, tel que le lithium, sur au moins une électrode. En particulier, dans un accumulateur lithium-ion, les cations Li⁺ font ainsi des allers-retours entre les électrodes, respectivement positive et négative, à chaque charge et décharge de l'accumulateur. Le matériau actif de l'électrode positive est capable de libérer des ions lithium au moment de la charge et d'incorporer des ions lithium au moment de la décharge.

Les supercondensateurs constituent des dispositifs de stockage d'énergie permettant d'obtenir une densité de puissance et une densité d'énergie intermédiaires entre celles fournies par des batteries électrochimiques et par des condensateurs électrolytiques classiques. En outre, ils restituent plus rapidement de l'énergie qu'une batterie électrochimique. Du point de vue du fonctionnement, les supercondensateurs fonctionnent sur le principe de la double-couche électrochimique, d'où l'appellation anglo-saxonne parfois rencontrée de « Electrochemical double layer capacitor » (connue également sous l'abréviation EDLC), soit, en d'autres termes, sur le principe de stockage d'énergie par distribution, au sein d'au moins une cellule, des ions provenant d'un électrolyte au voisinage de la surface de deux électrodes poreuses (respectivement, une électrode positive et une électrode négative) imprégnées d'un électrolyte ionique, séparées par une membrane poreuse permettant d'assurer une isolation électronique entre les électrodes, tout en permettant un passage facile des ions de l'électrolyte.

Dans les supercondensateurs standards, dits encore « symétriques », les deux électrodes (électrode positive et électrode négative) sont toutes deux à base de carbone activé et l'électrolyte est classiquement à base de sel d'ammonium, typiquement du tétrafluoroborate de tétraéthylammonium (Et₄NBF₄) dans l'acétonitrile ou dans du carbonate de propylène. Ces supercondensateurs symétriques présentent une forte densité de puissance et une cyclabilité élevée, mais une densité d'énergie faible liée à la capacité moyenne du supercondensateur et à la tension de fonctionnement.

Plus récemment, il a également été développé des supercondensateurs, dits « hybrides » ou « asymétriques », se situant entre les supercondensateurs symétriques classiquement utilisés à base de carbone activé et les batteries. Une des électrodes, classiquement l'électrode positive, est à base de carbone activé, l'autre électrode, classiquement l'électrode négative, étant constituée à partir d'un matériau de batterie rechargeable. Le stockage de charges dans un supercondensateur hybride se produit au niveau de l'électrode négative par le biais d'une réaction redox, tandis que le stockage de charges au niveau de l'électrode positive se produit par le biais de la formation d'une double-couche électrochimique.

Les supercondensateurs hybrides permettent avantageusement d'obtenir des densités d'énergie supérieures à celles des supercondensateurs conventionnels grâce à l'augmentation de la tension de fonctionnement du système.

La demande FR 3 005 199 décrit un exemple de supercondensateur hybride au potassium, comportant une électrode négative comportant du graphite, une électrode positive comportant du carbone activé et un électrolyte non aqueux comportant au moins un sel de potassium.

Il est important, pour les systèmes de stockage électrochimiques, qu'il s'agisse des batteries ou des supercondensateurs, de pouvoir connaître et suivre l'évolution du potentiel de chaque électrode, lors du fonctionnement de la cellule électrochimique. En particulier, pour des cellules mettant en oeuvre des électrolytes à base de solvant(s) organique(s), il importe que la cellule du système électrochimique ne fonctionne pas en dehors de la plage de stabilité électrochimique du ou desdits solvants organiques, pour ne pas engendrer de dégradations et notamment la production de gaz. De même, il est important de contrôler, via la limitation en potentiel, l'état de lithiation de certains composés tels que les oxydes lamellaires LiₓMO₂ dont la structure est instable pour x<0,5 (cas du LiCoO₂) ou x<0,2 (LiₓMO₂ avec M=Ni, Co, Mn à faible teneur en Co), ou encore éviter l'électrodépôt de lithium à l'état métallique à l'électrode négative à des potentiels inférieurs à 0 V *vs* Li⁺/Li. Afin de contrer l'apparition de tout phénomène indésirable, il importe de pouvoir connaître et suivre l'évolution du potentiel de chaque électrode, lors du fonctionnement de la cellule électrochimique.

Pour cela, il est souhaitable de pouvoir introduire une électrode dite de référence au sein du système électrochimique. Une électrode de référence doit présenter un potentiel stable et connu, permettant de connaître à chaque instant le potentiel de chacune des électrodes positive et négative du système.

La réalisation de systèmes à trois électrodes, notamment pour des cellules de format « pouch cell », a déjà été décrite dans le cadre de batteries métal-ion dans le document US 9,379,418. Les électrodes de référence proposées jusqu'à présent dans les systèmes de stockage électrochimiques, par exemple dans des batteries métal-ion, telles que des batteries lithium-ion, par exemple dans les documents Cengiz et al., J. Electrochem. Soc. 2021 [1], US 2009/0104510 ou US 9,379,418 ; reposent sur des alliages à base de lithium (par exemple, LiₓSn, LiₓBi, LiₓAu, LiₓIn, LiₓSi, LiₓAl, etc.), respectivement à base de sodium, de potassium, etc ; des matériaux d'intercalation de LiMO₂ avec M représentant Co, Ni ou Mn ; ou LiM'₂O₄ avec M' représentant Ni ou Mn ; ou encore des matériaux d'insertion tels que le LiM"PO₄ avec M" représentant Fe, Co, Mn ou Ni ; ou de type Li₄Ti₅O₁₂.

Dans le domaine des supercondensateurs, on peut également citer le document US 2011/0043968 qui propose, pour évaluer les caractéristiques électrochimiques de systèmes de supercondensateurs standards et hybrides au lithium, d'utiliser une électrode de référence au calomel saturé (ECS). L'utilisation d'une telle électrode de référence n'est toutefois pas compatible avec le conditionnement souhaité des cellules dans un format prismatique, en particulier de type « pouch cell ».

### Exposé de l'invention

La présente invention vise précisément à proposer des électrodes utiles comme électrodes de référence dans des cellules de systèmes de stockage ou générateurs électrochimiques, tels que des batteries métal-ion, des batteries lithium-soufre, des batteries lithium-air ou encore des supercondensateurs.

Les inventeurs ont ainsi découvert qu'il est possible de mettre en oeuvre une électrode formée à partir d'une électrode à base de matériau(x) électro-actif(s) organique(s) de type P et dont la réaction rédox associée présente un potentiel électrochimique constant.

Plus particulièrement, l'invention concerne, selon un premier de ses aspects, l'utilisation, à titre d'électrode de référence dans une cellule d'une batterie métal-ion, notamment une batterie sodium-ion, lithium-ion, potassium-ion, magnésium-ion ; une batterie lithium-soufre ou lithium-air ; ou d'un supercondensateur, en particulier d'un supercondensateur hybride au potassium, d'une électrode à base d'un ou plusieurs matériaux organiques électro-actifs de type P, dont la réaction rédox associée présente un potentiel électrochimique constant ;

le ou lesdits matériaux organiques de type P étant présents sous une forme partiellement oxydée chargée positivement, avec une compensation de charge par au moins un anion.

Une électrode de référence telle que définie ci-dessus, à base du ou desdits matériaux organiques de type P à l'état partiellement oxydé, chargé positivement, avec insertions d'anions, est désignée plus simplement dans la suite du texte sous l'appellation « électrode de référence selon l'invention ».

Les matériaux de type P considérés selon l'invention peuvent être plus particulièrement choisis parmi : des composés, en particulier des molécules, oligomères ou polymères, porteurs de fonctions rédox choisies parmi :
- des radicaux stables O^{•}, N^{•} ou NO^{•}, en particulier des fonctions nitroxyde (NO*) ou phénoxy (PhO*) ; tels que par exemple des polymères porteurs de groupements latéraux de structure 2,2,6,6-tétraméthylpipéridinyl-N-oxy (TEMPO) ;
- des fonctions éther (-O-) ou thioéther (-S-) conjuguées ; tels que le thianthrène, la phénothiazine, et leurs dérivés de type oligomères ou polymères ; les polymères conducteurs π-conjugués de type polythiophène (PT), par exemple le poly(3,4-éthylènedioxythiophène) ;
- des fonctions amines conjuguées, notamment des groupes amines aromatiques ou de type hétéroaryle, tels que la dianiline, la triphénylamine, la polyaniline ou le polypyrrole, des molécules de type viologène ou carbazole, les polyviologènes et polycarbazoles ; et d'autres polymères conducteurs π-conjugués, tels que les polyacétylènes.

Dans un mode de réalisation particulier, le ou lesdits matériaux organiques de type P sont choisis parmi des polymères, de préférence réticulés, porteurs de groupements latéraux possédant une ou plusieurs fonctions nitroxyde, par exemple porteurs de groupements latéraux de structure 2,2,6,6-tétraméthylpipéridinyl-N-oxy (TEMPO).

Comme décrit dans la suite du texte, l'électrode de référence mise en oeuvre selon l'invention peut être par exemple à base de poly(2,2,6,6-tétraméthylpipéridinyloxy-4-yl méthacrylate), dit PTMA.

Des matériaux électroactifs organiques de type P ont déjà été proposés pour leur mise en oeuvre comme matériaux actifs d'électrodes organiques dans des systèmes de stockage électrochimique, par exemple pour des batteries rechargeables. Par exemple, depuis sa découverte à l'université de Waseda en 2002 [2], plusieurs méthodes de préparation d'une électrode à base de PTMA et sa mise en oeuvre comme électrode positive au sein de batteries au lithium, ont été documentées, par exemple dans les publications [3] à [7]. On peut citer également les documents CN101130583 et FR3107614 qui présentent des méthodes pour la préparation d'une électrode de PTMA.

En revanche, à la connaissance des inventeurs, il n'a jamais été proposé de former une électrode de référence à partir de ces électrodes organiques.

Comme évoqué précédemment, une électrode de référence est définie comme étant une électrode possédant un potentiel électrochimique stable et connu, permettant avantageusement de servir de point de référence pour mesurer indépendamment le potentiel des électrodes positive et négative dans une cellule électrochimique.

Comme détaillé dans la suite du texte, une électrode de référence selon l'invention peut être obtenue, préalablement à son utilisation dans ladite cellule d'une batterie métal-ion, une batterie lithium-soufre ou lithium-air ; ou d'un supercondensateur, , à partir d'une électrode à base du ou desdits matériaux organiques de type P, par oxydation partielle du ou desdits matériaux organiques de type P avec une compensation des charges positives crées lors de l'oxydation par insertion d'anions, pour atteindre le potentiel électrochimique constant (autrement dit, le plateau de potentiel).

L'électrode de référence peut être mise en oeuvre pour des batteries métal-ion, notamment des batteries sodium-ion, lithium-ion, potassium-ion, magnésium-ion ; des batteries lithium-soufre ou lithium-air ; et supercondensateurs, par exemple les supercondensateurs hybrides au potassium.

L'invention concerne encore, selon un autre de ses aspects, une cellule d'une batterie métal-ion, notamment une batterie sodium-ion, lithium-ion, potassium-ion, magnésium-ion ; une batterie lithium-soufre ou lithium-air ; ou d'un supercondensateur, en particulier d'un supercondensateur hybride au potassium, comportant trois électrodes :
- une électrode positive ;
- une électrode négative ; et
- une électrode de référence selon l'invention.

Ainsi, l'invention met en oeuvre un système à trois électrodes, les électrodes positive et négative de la cellule du système de stockage électrochimique et, en outre, une électrode de référence selon l'invention à base de matériau(x) organique(s) de type P.

A titre d'exemple, comme illustré dans les exemples qui suivent, l'électrode de référence peut être mise en oeuvre dans une cellule d'un supercondensateur, en particulier d'un supercondensateur hybride au potassium.

L'invention concerne encore une batterie métal-ion, une batterie lithium-soufre ou lithium-air, ou un supercondensateur, comprenant au moins une cellule telle que définie précédemment, intégrant une électrode de référence à base de matériau(x) organique(s) de type P.

De manière avantageuse, une électrode de référence selon l'invention est compatible avec le conditionnement des cellules dans tout format souhaité, en particulier dans un format prismatique, avantageusement sous la forme d'une cellule type sachet souple, plus connue sous l'appellation en anglais « pouch cell », comme illustré dans les exemples qui suivent.

L'intégration d'une électrode de référence selon l'invention au sein d'au moins l'une des cellules d'une batterie métal-ion, d'une batterie lithium-soufre ou lithium-air, ou d'un supercondensateur, permet avantageusement d'accéder aux potentiels de chacune des électrodes positive et négative. La connaissance et le suivi des potentiels des électrodes positive et négative permet de pouvoir détecter le cas échéant des défauts potentiels à leur fonctionnement.

Ainsi, l'invention concerne, selon un autre de ses aspects, l'utilisation d'une électrode de référence à base de matériau(x) organique(s) de type P telle que définie précédemment, dans une batterie métal-ion, une batterie lithium-soufre ou lithium-air, ou un supercondensateur, pour connaître les potentiels d'au moins l'une des électrodes positive et négative, de préférence de chacune des électrodes positive et négative, en particulier pour suivre l'évolution des potentiels d'au moins l'une des électrodes positive et négative, au cours du fonctionnement dudit système.

Une surveillance des potentiels des électrodes positive et négative au cours du fonctionnement du système de stockage électrochimique, par l'intermédiaire de l'électrode de référence selon l'invention, permet avantageusement une utilisation optimisée de ladite batterie ou dudit condensateur, en particulier une utilisation à sa capacité maximale, sans pour autant s'exposer à des risques de dysfonctionnement, et permet ainsi une sûreté améliorée à l'usage de ladite batterie ou dudit condensateur.

D'autres caractéristiques, variantes et avantages d'une électrode de référence selon l'invention et de sa mise en oeuvre au niveau d'une cellule d'une batterie métal-ion, d'une batterie lithium-soufre ou lithium-air, ou d'un supercondensateur selon l'invention, ressortiront mieux à la lecture de la description, des exemples et figures qui vont suivre, donnés à titre illustratif et non limitatif de l'invention.

### Brève description des dessins

[Fig 1] présente, de manière schématique, en coupe transversale, un exemple d'assemblage 100 des différents éléments, y compris l'électrode de référence selon l'invention, au sein d'une cellule d'une batterie métal-ion, d'une batterie lithium-soufre ou lithium-air, ou d'un supercondensateurselon l'invention ;
[Fig 2] présente, de manière schématique, la pile bouton Li métal/PTMA utilisée en exemple 1 pour préparer l'électrode de référence à base de PTMA ;
[Fig 3] présente le profil de charge/décharge galvanostatique à C/5 de la pile Li métal/PTMA utilisée dans l'exemple 1 pour préparer une électrode de référence, dans le cas d'un cycle de charge/décharge complet ;
[Fig 4] présente, de manière schématique, une cellule de supercondensateur au format pouch-cell, comme préparé en exemple 2, comprenant une électrode positive, l'électrode de référence selon l'invention et une électrode négative, les électrodes étant séparées par des membranes poreuses en polypropylène, imprégnées par l'électrolyte ;
[Fig 5] présente les courbes obtenues selon l'exemple 3 de tension de la cellule et des potentiels des électrodes négative et positive pour la cellule de supercondensateur hybride préparée en exemple 2 lors des différentes étapes de formation d'un supercondensateur hybride au potassium : charge à C/2 jusqu'à 3,2 V, maintien pendant 24 heures à la tension de 3,2 V et décharge à C/2 jusqu'à 0,5 V.
[Fig 6] présente l'évolution des potentiels des électrodes positive et négative d'une cellule de supercondensateur hybride préparée en exemple 2 pour des régimes de C ; 2,5C et 5C.

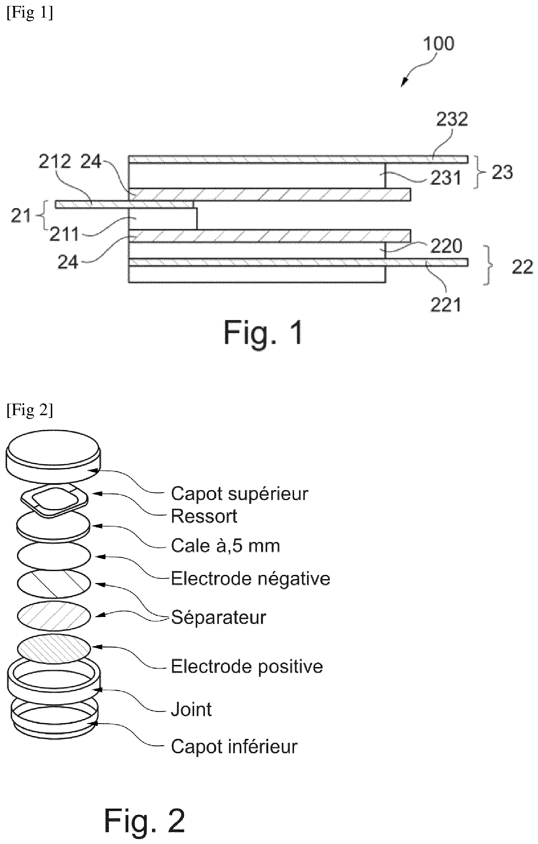

Il convient de noter que, pour des raisons de clarté, les différents éléments sur les figures 1, 2 et 4 sont représentés en échelle libre, les dimensions réelles des différentes parties n'étant pas respectées.

Dans la suite du texte, les expressions « compris entre ... et ... », « allant de ... à ... » et « variant de ... à ... » sont équivalentes et entendent signifier que les bornes sont incluses, sauf mention contraire.

### Description détaillée

### ELECTRODE DE REFERENCE

Comme indiqué précédemment, l'invention met en oeuvre une électrode de référence préparée à partir d'une électrode à base d'un ou plusieurs matériaux organiques électro-actifs de type P dont la réaction rédox associée présente un potentiel électrochimique constant. Par matériau, dit encore composé, « organique », on entend un composé, en particulier de nature moléculaire, oligomérique ou polymérique, de la chimie du carbone, comportant des atomes de carbone et d'hydrogène, et un ou plusieurs hétéroatomes choisis parmi l'oxygène, l'azote, le soufre, le phosphore, ces atomes et hétéroatomes étant uniquement liés par des liaisons covalentes, ce composé pouvant être sous forme d'un sel, par exemple un sel métallique.

Par matériau électro-actif « de type P » ou « donneur d'électrons », on entend désigner un matériau organique pouvant subir, du fait de la nature de ses fonctions électroactives, une oxydation réversible de l'état neutre vers un état chargé positivement, avec une compensation de charge anionique.

Les matériaux de type P ont donc pour mécanisme l'insertion d'anions lors de leur oxydation.

Le mécanisme électrochimique associé à un matériau de type P peut être schématisé comme suit :

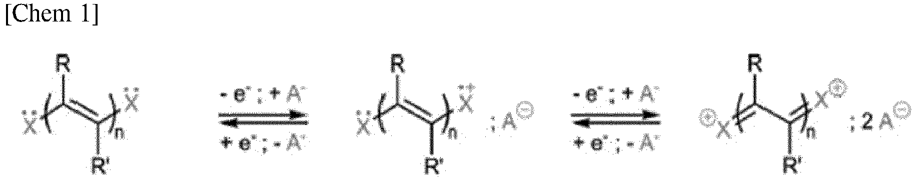

La réaction électrochimique d'oxydo-réduction, dite également réaction rédox, associée au passage réversible de l'état réduit dudit matériau organique de type P mis en oeuvre selon l'invention à un état oxydé, chargé positivement, a la particularité de présenter un potentiel électrochimique constant. En particulier, le matériau organique électroactif de type P de l'électrode présente un potentiel constant sur une majeure partie de la plage de fonctionnement en capacité.

Comme décrit dans les exemples, le potentiel électrochimique constant, associé à un matériau actif de type P, peut être identifié par un test en cyclage de l'électrode à base dudit matériau organique de type P assemblée en demi-cellule ou cellule complète, par exemple sous forme de pile-bouton, en opérant une charge ou une décharge en mode galvanostatique. Le potentiel électrochimique constant correspond au plateau de potentiel observé au niveau des courbes de charge/décharge à courant constant (par exemple, courbes de variation du potentiel E en fonction du temps ou en fonction de la capacité absolue ou spécifique massique lors d'un cyclage en mode galvanostatique). A noter qu'en cellule complète (c'est toujours le cas en demi-cellule avec une contre-électrode de lithium), ce plateau de potentiel n'est observable que si la contre-électrode utilisée (qui joue alors le rôle de référence) présente également un plateau de potentiel lors de sa charge/décharge à courant constant. Comme illustré dans la suite du texte, la valeur du plateau de potentiel associé à l'électrode de référence dépend de la nature du ou desdits matériaux organiques de type P mis en oeuvre, et notamment du type de fonctionnalité rédox du matériau organique de type P mis en oeuvre.

Comme détaillé dans la suite du texte, une électrode de référence selon l'invention peut être obtenue, préalablement à son utilisation, à partir d'une électrode à base d'au moins un matériau organique de type P, par oxydation partielle du ou desdits matériaux organiques de type P avec une compensation des charges positives crées lors de l'oxydation par insertion d'anions.

### Electrode à base de matériau(x) organique(s) de type P

Comme indiqué précédemment, un matériau organique de type P comporte des fonctions (motifs ou fragment) actives électrochimiquement ou fonction rédox, pouvant passer d'une forme réduite, neutre, à une forme oxydé chargée positivement, la charge positive étant compensée par au moins un anion.

Le matériau organique de type P selon l'invention peut être choisi parmi les matériaux organiques, molécules, oligomères ou polymères organiques, déjà proposés comme matériaux actifs d'électrodes organiques, par exemple pour des batteries. De tels matériaux sont documentés dans la littérature [8].

En particulier, le ou lesdits matériaux organiques de type P selon l'invention peuvent être choisis parmi des composés, en particulier des molécules, oligomères ou polymères, porteurs de fonctions rédox choisies parmi :
- des radicaux stables O^{•}, N^{•} ou NO^{•}, en particulier des fonctions nitroxyde (NO*) ou phénoxy (PhO*) ;
- des fonctions éther (-O-) ou thioéther (-S-) ;
- des fonctions amines conjuguées, par exemple des groupes amines aromatiques ou hétéroaromatiques ; et
d'autres polymères conducteurs π-conjugués, tels que les polyacétylènes.

Il est entendu que l'électrode de référence peut être à base d'un unique matériau organique de type P ou d'un mélange d'au moins deux matériaux organiques de type P, en particulier choisis parmi les composés décrits précédemment.

Le composé organique de type P peut notamment se présenter sous la forme d'une molécule, d'un oligomère ou d'un polymère. Selon un mode de réalisation particulier, il se présente sous la forme d'un polymère, en particulier présentant des motifs rédox tels que listés précédemment, et plus particulièrement dont au moins l'un des motifs répétitifs est porteur de groupements présentant au moins un motif rédox tel que cité précédemment.

Par « polymère », on entend désigner à la fois les homopolymères et copolymères. Avantageusement, le matériau organique rédox de type P est sous la forme d'un polymère réticulé. Par « polymère réticulé », on entend désigner au sens de l'invention des polymères résultant de l'utilisation, lors de la polymérisation, d'un agent réticulant ou ramifiant, c'est-à-dire présentant plusieurs fonctions polymérisables, de préférence bi- ou tri-fonctionnalisées.

Ces matériaux organiques rédox peuvent être préparés selon des méthodes conventionnelles connues de l'homme du métier.

Des exemples de composés organiques de type P sont décrits plus précisément ci-dessous.

### Composés porteurs de radicaux stables

Selon un mode de réalisation particulier, le matériau organique de type P peut être choisi parmi des composés porteurs d'un ou plusieurs radicaux stables O^{•}, N^{•} ou NO^{•}, en particulier de fonctions nitroxyde (NO*) ou phénoxy (PhO*).

Le mécanisme redox associé à une fonction nitroxyde peut être schématisé comme suit :

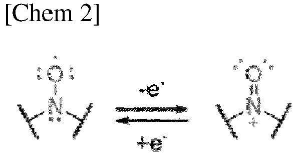

D'une manière générale, la réaction redox, associée au passage de la fonction nitroxyde NO*, à sa forme oxydée chargée positivement (ion oxoammonium) avec compensation de charge anionique, présente un potentiel constant de l'ordre de 3-4 V *vs* Li⁺/Li.

Le matériau organique de type P peut être plus particulièrement choisi parmi les oligomères ou polymères, de préférence réticulés, porteurs de groupements latéraux possédant au moins un radical stable de type O^{•}, N^{•} ou NO^{•}, en particulier possédant au moins une fonction nitroxyde et/ou phénoxy et plus particulièrement une ou plusieurs fonctions nitroxyde.

Le polymère peut être par exemple choisi parmi les polymères possédant un squelette linéaire choisi parmi les poly(méth)acrylates, les polythiophènes, les polyfluorènes, les polycarbazoles, les polyanilines, les polyphénylènes, les polyisothionaphtènes, les polyacétylènes, les polyphénylènevinylènes, et leurs copolymères ; et porteurs d'au moins des groupements latéraux possédant au moins un radical stable de type O^{•}, N^{•} ou NO^{•}, en particulier possédant au moins une fonction nitroxyde et/ou phénoxy, en particulier au moins une fonction nitroxyde.

A titre d'exemples de groupements possédant une ou plusieurs fonctions nitroxyde, peuvent être cités les groupements présentant l'une des structures suivantes : 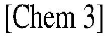 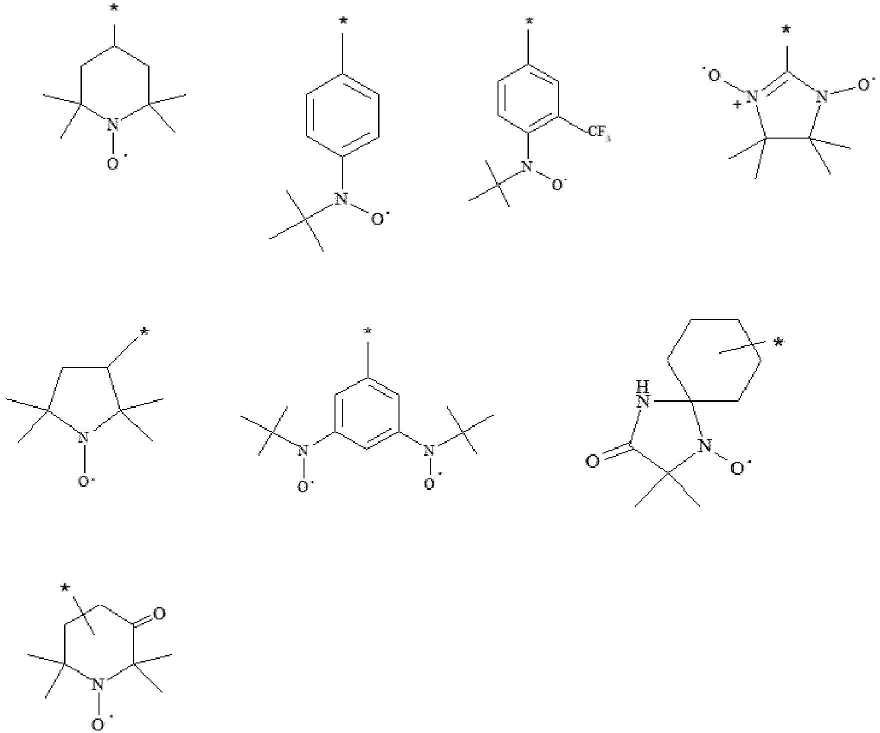 avec * figurant la localisation du site de liaison au squelette linéaire dudit polymère organique.

Dans un mode de réalisation particulier, le matériau organique de type P est un polymère, en particulier possédant un squelette linéaire tel que défini ci-dessus, porteur de groupements latéraux de structure 2,2,6,6-tétraméthylpipéridinyl-N-oxy, encore appelée TEMPO.

Selon un mode de réalisation particulier, il peut s'agir d'un poly(2,2,6,6-tétraméthylpipéridinyloxy-4-yl méthacrylate), noté PTMA, dont la structure est rappelée ci-dessous

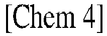

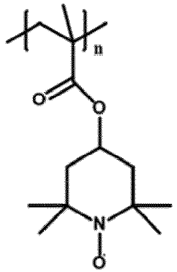

### Composés porteurs de fonctions éther (-O-) et/ou thioéther (-S-) conjuguées

Selon un mode de réalisation particulier, le matériau organique de type P peut être choisi parmi des composés porteurs d'une ou plusieurs fonctions de type éther conjuguée(s) (dites encore « etheroxide ») et/ou thioéther conjuguée(s).

Les mécanismes redox associés à une fonction éther ou thioéther conjuguée peuvent être schématisés comme suit :

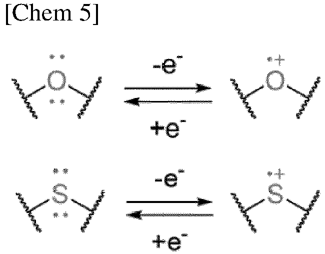

D'une manière générale, la réaction redox, associée au passage de la fonction éther ou thioéther à sa forme oxydée chargée positivement avec compensation de charge anionique, présente, selon la nature du composé organique, un potentiel constant compris entre 3 et 4,5 V *vs* Li⁺/Li.

Le matériau organique de type P porteur de fonctions éther et/ou thioéther peut être notamment choisi parmi des molécules, oligomères ou polymères.

A titre d'exemple de composés porteurs de fonctions éther et/ou thioéther peuvent être cités le thianthrène, la phénothiazine, et leurs dérivés de type oligomères ou polymères.

On peut également citer comme matériaux de type P présentant des fonctions actives de type thioéther, les polymères conducteurs π-conjugués de type polythiophène (PT), par exemple le poly(3,4-éthylènedioxythiophène), plus connu sous l'appellation « PEDOT ».

A titre d'exemple, la réaction électrochimique, associée à l'oxydation des fonctions thioéthers du polythiophène avec compensation par des anions A⁻, peut être schématisée comme suit :

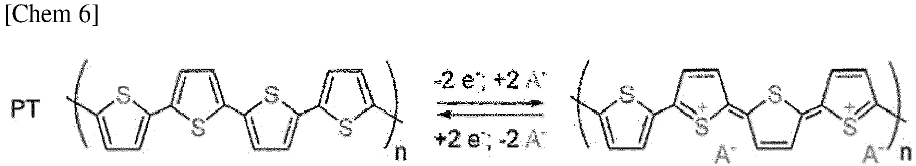

### Composés porteurs de fonctions amines conjuguées

Selon un mode de réalisation particulier, le matériau organique de type P peut être choisi parmi des composés porteurs de fonctions amines conjuguées, en particulier des composés, oligomères ou polymères, comprenant un ou plusieurs groupes amines aromatiques (de type Ar-NR₂) ou de type hétéroaryle dont au moins l'un des groupes CH est remplacé par un atome d'azote.

Le mécanisme redox associé à une fonction amine conjuguée peut être schématisé comme suit (oxydation du motif électroactif de type amine en motif ammonium) :

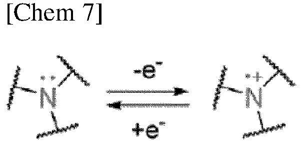

Il peut s'agir par exemple de molécules comme la dianiline ou la triphénylamine

Il peut encore s'agir de molécules de type viologène ou carbazole, ou encore d'oligomères ou polymères dérivés, tels que des polyviologènes et polycarbazoles.

A titre d'exemple, la réaction redox, associée au passage du viologène à sa forme oxydée chargée positivement avec compensation de charge anionique, présente un potentiel constant compris entre 1,5 et 3 V *vs* Li⁺/Li.

A titre d'exemple, la réaction redox, associée au passage du carbazole à sa forme oxydée chargée positivement avec compensation de charge anionique, présente un potentiel constant compris entre 3 et 4 V *vs* Li⁺/Li.

On peut encore citer, à titre de matériau organique de type P porteur de fonctions amines conjuguées, des polymères conducteurs π-conjugués de type polyaniline ou polypyrrole.

A titre d'exemple, la réaction électrochimique, associée à l'oxydation des fonctions amines conjuguées du polypyrrole avec compensation par des anions A⁻, peut être schématisée comme suit :

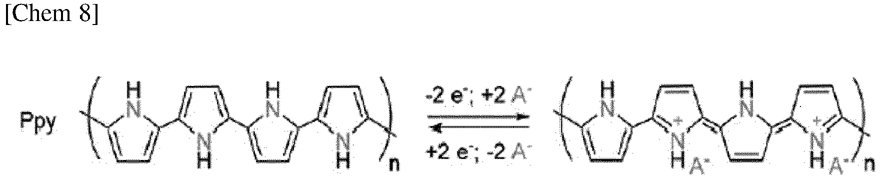

### Autres polymères conducteurs π-conjugués

A titre de matériau de type P, peuvent également être cités des polymères conducteurs π-conjugués, autres que ceux déjà considérés précédemment, comme les polythiophènes, les polyanilines et les polypyrroles, par exemple les polyacétylènes.

Il relève des connaissances de l'homme du métier d'ajuster la forme sous laquelle se présente le matériau organique de type P afin d'assurer que le matériau de l'électrode de référence, lors de son utilisation au niveau de la cellule de la batterie métal-ion, de la batterie lithium-soufre ou lithium-air, ou du supercondensateur, ne se dégrade pas, en particulier ne se dissolve pas dans l'électrolyte de la cellule électrochimique dans laquelle il est mis en oeuvre. Plusieurs stratégies sont connues pour insolubiliser les composés organiques rédox. Comme vu précédemment, l'une des stratégies les plus couramment utilisées consiste à préparer le composé organique rédox sous la forme de polymères ou copolymères, réticulés ou non, avec des fonctions rédox pendantes ou intramoléculaires.

Une autre stratégie pour insolubiliser les composés organiques électroactifs consiste à réaliser des structures composites par physisorption, avec un substrat inorganique, par exemple en silice, alumine, carbone, au sein desquelles se créent des liaisons faibles (hydrogène, interactions π- π, Van der Waals), permettant de limiter, voire d'empêcher la dissolution du composé organique rédox.

Il est également possible d'effectuer un greffage du composé organique électroactif sur un solide inorganique (silice, alumine, carbone, etc.) *via* des liaisons ioniques ou covalentes, par exemple par réaction acido-basique avec les hydroxyles de la surface de la silice ou par réaction de sels de diazonium, avec la surface du carbone, afin de former un composé hybride organique/inorganique insoluble.

Une autre stratégie consiste encore à ajouter des fonctions ioniques sur le composé organique électroactif, par exemple de type carboxylate, sulfonate, alcoolate, imidure, énolate, etc., permettant de limiter la dissolution du composé en milieu organique.

Ainsi, une électrode à base d'un ou plusieurs matériaux organiques de type P considérée selon l'invention s'entend d'une électrode comprenant un ou plusieurs composés organiques de type P, porteurs de motifs rédox tels que considérés ci-dessus, le ou lesdits composés pouvant se présenter sous différentes formes, telles que considérées ci-dessus, par exemple sous forme associée à d'autres matériaux au sein de composites, pour autant qu'elles autorisent la réaction électrochimique associée audit matériau organique de type P, en particulier son oxydation avec compensation de charges anioniques.

Dans un mode de réalisation particulier, ladite électrode de référence comprend le ou lesdits matériau(x) organique(s) de type P sous la forme d'un matériau composite particulaire associant le ou lesdits matériaux organiques de type P et un ou plusieurs matériaux nanostructurés conducteurs électroniques, notamment carbonés, par exemple préparé comme décrit dans la demande FR3107614.

Plus particulièrement, comme décrit dans la demande précitée, un matériau composite comprenant le ou lesdits matériaux organiques de type P peut être préparé *via* au moins les étapes suivantes :
- disposer d'une formulation d'au moins un matériau organique de type P, à l'état gonflé ou solubilisé dans un milieu solvant, notamment dans un ou plusieurs solvants organiques, dans lequel est dispersé au moins un matériau nanostructuré conducteur électronique ;
- éliminer le ou les solvants du milieu solvant, en particulier par évaporation, notamment par chauffage de la formulation ; et
- broyer le matériau solide obtenu sous la forme d'une poudre pour former ledit matériau composite particulaire.

A titre d'exemple, dans le cadre de la préparation d'un tel matériau composite, les matériaux organiques de type P, de type polymères porteurs de groupements latéraux possédant au moins une fonction nitroxyde, par exemple le PTMA, peuvent être gonflés dans le dichlorométhane.

Les matériaux nanostructurés conducteurs électroniques peuvent être plus particulièrement choisis parmi des matériaux nanostructurés carbonés, des matériaux nanostructurés métalliques, notamment en aluminium, en cuivre, en nickel, en argent, en or, en platine, en titane, en palladium, en zinc ou des alliages de ceux-ci ; et leurs mélanges.

En particulier, le matériau nanostructuré conducteur électronique peut être un matériau carboné nanostructuré, notamment choisi parmi des nanotubes de carbone, des nanofils de carbone, des nanofibres de carbone, des nanoparticules de carbone, des nanocristaux de carbone, du graphène ou un dérivé de graphène choisi parmi les oxydes de graphène ou oxydes de graphène réduits, du noir de carbone et leurs mélanges.

Le matériau composite particulaire obtenu se présente plus particulièrement sous la forme de particules formées d'une matrice nanostructurée conductrice électronique, en particulier carbonée, partiellement enrobée dudit matériau organique de type P, en particulier d'un film polymérique organique de type P, de préférence réticulé.

Le rapport massique matériau(x) organique(s) de type P/matériau(x) nanostructuré(s) conducteur(s) électronique(s), par exemple carboné(s), peut être par exemple compris entre 1/1 et 20/1, en particulier entre 2/1 et 10/1 et plus particulièrement entre 4/1 et 8/1, notamment entre 4/1 et 5/1.

Il est entendu que l'invention n'est nullement limitée à cette forme de mise en oeuvre, et que toute électrode à base matériau(x) actif(s) organique(s) de type P, tels que définis précédemment, peut être mise en oeuvre.

### Préparation de l'électrode à base du matériau(x) organique(s) de type P

L'électrode à base du ou desdits matériaux électro-actifs organiques de type P, à partir de laquelle est obtenue une électrode de référence selon l'invention, peut être préparée par tout méthode connue de l'homme du métier.

L'électrode peut être composée typiquement d'une couche comprenant un mélange du ou desdits matériaux électro-actifs organiques de type P, d'un ou plusieurs liants et éventuellement d'un ou plusieurs additifs conducteurs électroniques, en surface d'un collecteur de courant.

La préparation de ladite électrode peut comprendre, d'une manière générale, au moins les étapes suivantes :
- préparation d'une dispersion, plus couramment appelée encre, comprenant, dans un ou plusieurs solvants aqueux et/ou organiques, au moins ledit matériau organique de type P, par exemple sous forme de matériau composite particulaire, comme décrit précédemment ; un ou plusieurs additifs conducteurs électroniques, et éventuellement un ou plusieurs liants ;
- dépôt de l'encre à la surface d'un collecteur de courant ; et
- évaporation du ou desdits solvant(s) de l'encre pour former le film d'électrode.

Le solvant de l'encre peut comprendre de l'eau et/ou un ou plusieurs solvants organiques, par exemple choisis parmi la N-méthyl-2-pyrrolidone (NMP), le tétrahydrofurane (THF), l'acétone, le N,N-diméthylformamide (DMF), l'acétonitrile et l'éthanol.

Les additifs conducteurs électroniques sont mis en oeuvre pour améliorer la conductivité électronique de l'électrode. Ils peuvent être choisis par exemple parmi des fibres de carbone, du noir de carbone, des nanotubes de carbone et leurs mélanges.

Le ou lesdits additifs conducteurs électroniques peuvent être mis en oeuvre de préférence en une teneur allant de 0,5 à 50 % massique, en particulier de 1 à 20 % massique, par rapport à la masse l'électrode. Il est entendu que la masse totale de l'électrode n'inclut pas la masse du collecteur de courant.

Les liants sont mis en oeuvre pour assurer la tenue mécanique de l'électrode sur le collecteur de courant, la cohésion des différents composants de l'électrode ou encore ses propriétés de flexibilité. Ils peuvent être choisis parmi des liants polymères, en particulier choisis parmi les polymères fluorés, par exemple parmi le polytétrafluoroéthylène (PTFE), le polyfluorure de vinylidène (PVDF), les polymères dérivés de carboxyméthylcellulose, les polysaccharides et les latex notamment de type caoutchouc styrène-butadiène (BR ou en langue anglaise « stryrene-butadiene rubber »).

A titre d'exemple, le liant est la carboxyméthylcellulose.

Le ou lesdits liants peuvent être présents en une quantité inférieure ou égale à 20 % massique, par rapport à la masse totale de l'électrode, en particulier inférieure ou égale à 5 % massique, notamment comprise entre 1 et 3 % massique, par rapport à la masse totale de l'électrode. Il est entendu que la masse totale de l'électrode n'inclut pas la masse du collecteur de courant.

L'encre peut être homogénéisée avant son étalement.

Le dépôt de l'encre à la surface du collecteur de courant peut être opéré par toute technique connue de l'homme du métier, par exemple par enduction, par une technique d'impression, par extrusion ou par colaminage.

Le collecteur de courant peut être plein, par exemple sous la forme d'un feuillard ou sous la forme d'une grille.

Le collecteur de courant peut être en un matériau métallique choisi parmi le cuivre, l'aluminium, le nickel ou l'inox potentiellement revêtu de carbone.

L'évaporation du ou des solvants de l'encre peut être opérée par séchage, par exemple à l'étuve, à une température comprise entre 20°C et 150°C, notamment entre 50°C et 80°C, en particulier pendant une durée comprise entre 1 et 15 heures.

Le ou lesdits matériau(x) organique(s) de type P peu(ven)t représenter de 50 à 98 % massique, en particulier de 70 à 95 % massique, par rapport à la masse totale de l'électrode, exclusion faite de la masse du collecteur de courant.

De préférence, le grammage de l'électrode (défini comme la masse de matériau organique de type P en grammes par unité de surface en cm²) est compris entre 0,1 mg/cm² et 50 mg/cm², en particulier entre 1 mg/cm² et 20 mg/cm². Le grammage de l'électrode en matériau organique de type P, autrement dit la masse de matériau organique de type P par unité de surface, peut être ajusté en contrôlant le taux de matériau organique de type P et l'épaisseur de dépôt, notamment d'enduction, de l'encre formulée sur le collecteur de courant.

### Obtention de l'électrode de référence

Comme indiqué précédemment, on accède à l'électrode de référence en procédant à une oxydation partielle du ou desdits matériaux organiques de type P, de sorte à obtenir le potentiel électrochimique constant associé à la réaction rédox.

L'oxydation partielle du ou desdits matériaux organiques de type P fait plus particulièrement intervenir une compensation des charges positives créées lors de l'oxydation par insertions d'anions.

Plus précisément, l'obtention d'une électrode de référence selon l'invention met en oeuvre les étapes suivantes :
(i) fourniture d'une cellule électrochimique, comprenant ladite électrode à base du ou desdits matériau(x) organique(s) de type P comme électrode de travail, une contre-électrode ; et un électrolyte à base d'au moins un sel ionique ; et
(ii) oxydation de l'électrode de travail de ladite cellule dans des conditions adaptées pour atteindre un plateau de potentiel.

Selon une première variante de réalisation, la cellule électrochimique pour la préparation de l'électrode de référence peut être une cellule électrochimique distincte de la cellule de la batterie métal-ion, de la batterie lithium-soufre ou lithium-air, ou du supercondensateur dans laquelle l'électrode de référence est destinée à être utilisée.

Selon une autre variante de réalisation, l'électrode de référence peut être préparée directement au niveau de la cellule électrochimique de la batterie métal-ion, de la batterie lithium-soufre ou lithium-air, ou du supercondensateur dans laquelle elle est destinée à être utilisée, l'électrode positive ou négative servant alors de contre-électrode pour la préparation de l'électrode de référence.

Le matériau de la contre-électrode peut être de diverses natures, pour autant qu'il puisse se réduire ; il s'agit par exemple d'une électrode à base de graphite, de lithium ou d'oxyde de silicium SiO_{y} où y est compris entre 1 et 2.

Également, tout type de contre-anions peut être mis en oeuvre pour compenser la charge positive dudit matériau organique sous forme partiellement oxydée. Il peut s'agir d'anions monovalents ou polyvalents, par exemple divalents.

Il peut s'agir par exemple d'un ou plusieurs anions organiques, par exemple choisis parmi [N(SO₂CF₃)₂]⁻ (également noté TFSI⁻), [N(SO₂F)₂]⁻ (également noté FSI⁻), 4,5-dicyano-2-(trifluoromethyl)imidazole (également noté TDI), RCOO⁻ où R est une chaîne hydrocarbonée, HCOO⁻, ou encore d'anions inorganiques comme par exemple PF₆⁻, BF₄⁻, ClO₄⁻, F⁻, Cl⁻, Br⁻, I⁻, NO₃⁻ et HSO₄⁻.

L'électrolyte peut par exemple comprendre un ou plusieurs sels de métal alcalin ou alcalino-terreux, par exemple de lithium, comprenant un ou plusieurs des anions précités. Avantageusement, mais de manière non restrictive, le ou lesdits anions sont de même nature que le ou lesdits anions entrant dans la composition de l'électrolyte, et plus particulièrement dans la composition du ou desdits sels de l'électrolyte, de ladite cellule de la batterie métal-ion, de la batterie lithium-soufre ou lithium-air, ou du supercondensateur dans laquelle/lequel ladite électrode de référence est destinée à être mise en oeuvre.

A titre d'exemple, dans le cas où l'électrode de référence selon l'invention est destinée à être mise en oeuvre au niveau d'une des cellules d'un supercondensateur au potassium, tel qu'un supercondensateur hybride au potassium, comme décrit dans l'exemple qui suit, le ou lesdits contre-anions pour la compensation des charges positives du matériau organique sous sa forme partiellement oxydée, peuvent être choisis parmi le ou les contre-anions du ou desdits sels de potassium de l'électrolyte du supercondensateur de potassium dans lequel ladite électrode de référence est destinée à être mise en oeuvre.

A titre d'exemple, dans le cas où l'électrolyte du supercondensateur comprend comme sel de potassium, du KPF₆, les charges positives du matériau organique de type P sous forme partiellement oxydée peuvent être avantageusement compensées par des anions PF₆⁻.

A titre d'exemple, pour la préparation d'une électrode de référence selon à l'invention à base de PTMA, la réaction électrochimique, associée à l'oxydation des fonctions nitroxyde du PTMA avec compensation par des anions A⁻, peut être schématisée comme suit :

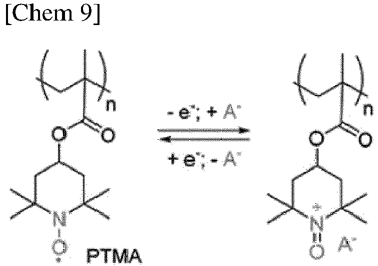

L'électrode de référence peut être préparée en procédant directement à une charge partielle de ladite cellule jusqu'à atteindre le plateau de potentiel, au cours de laquelle les charges positives crées du fait de l'oxydation partielle du matériau organique de type P sont compensées par des anions.

Alternativement, l'électrode de référence peut être préparée en procédant à une charge partielle de ladite cellule, au cours de laquelle les charges positives créées du fait de l'oxydation du matériau organique de type P, sont compensées par des anions. Il est également possible de réaliser une charge complète, suivie d'une décharge partielle, afin d'atteindre le plateau de potentiel.

La charge et, éventuellement, décharge partielle, pour atteindre le plateau de potentiel peut être par exemple réalisée à un régime allant de C/100 à 5C.

Eventuellement, dans le cas où l'électrode de référence est préparée dans une cellule distincte de la cellule de la batterie métal-ion, de la batterie lithium-soufre ou lithium-air, ou du supercondensateur dans laquelle/lequel elle est mise en oeuvre, l'électrode de référence préparée peut être nettoyée préalablement à sa mise en oeuvre au sein de la cellule de ladite batterie ou dudit condensateur. Par exemple, elle peut être rincée au carbonate de diméthyle, afin d'éliminer les sels résiduels au niveau de la porosité de l'électrode.

Le ou lesdits matériaux organiques de type P, sous leur forme partiellement oxydée chargée positivement, avec une compensation par au moins un anion, peuvent représenter de 5 à 95 % massique, en particulier de 30 à 70 % massique et plus particulièrement de 40 à 60 % massique, par rapport à la masse totale de matériau(x) de type P présent(s) dans l'électrode. Comme indiqué précédemment, l'électrode de référence selon l'invention comprend, outre le ou lesdits matériaux organiques de type P sous forme partiellement oxydée, un ou plusieurs additifs conducteurs électroniques, en particulier tels que définis précédemment, notamment choisis parmi des fibres de carbone, du noir de carbone, des nanotubes de carbone et leurs mélanges, et éventuellement un ou plusieurs liants, en particulier tels que définis précédemment, en particulier un ou plusieurs liants polymères, notamment choisis parmi les polymères fluorés, par exemple parmi le polytétrafluoroéthylène (PTFE), le polyfluorure de vinylidène (PVDF), les polymères dérivés de carboxyméthylcellulose, les polysaccharides et les latex notamment de type caoutchouc styrène-butadiène.

Le ou lesdits liants peuvent représenter moins de 20 % massique de la masse totale de l'électrode, en particulier moins de 5 % massique, notamment entre 1 et 3 % massique, de la masse totale de l'électrode, exclusion faite de la masse du collecteur de courant.

Le ou lesdits additifs conducteurs électroniques peuvent représenter de 0,5 à 50 % massique, en particulier de 5 à 20 % massique, de la masse totale de l'électrode, exclusion faite de la masse du collecteur de courant.

De préférence, le grammage de l'électrode de référence à base du ou desdits matériaux organiques de type P, défini comme la masse de matériau(x) organique(s) de type P en grammes par unité de surface en cm², est compris entre 0,1 mg/cm² et 50 mg/cm², en particulier entre 1 mg/cm² et 20 mg/cm².

### SYSTEME DE STOCKAGE ELECTROCHIMIQUE

Comme indiqué précédemment, l'électrode à base de matériau(x) organique(s) de type P, sous forme partiellement oxydée, telle que décrite précédemment, peut être mise en oeuvre comme électrode de référence au sein d'au moins une cellule d'une batterie métal-ion, d'une batterie lithium-soufre ou lithium-air, ou d'un supercondensateur.

Les batteries ou condensateurs dans lesquels une électrode de référence selon l'invention peut être incorporée, peuvent être divers. Il peut s'agir d'une batterie métal-ion, telles que des batteries au sodium, au lithium, au potassium, au magnésium ; d'une batterie lithium-soufre ou lithium-air.

Il peut encore s'agir d'un supercondensateur, en particulier d'un supercondensateur « standard » ou d'un supercondensateur dit « hybride », en particulier d'un supercondensateur hybride au potassium.

Quelle que soit la nature de la batterie ou du condensateur, la cellule comprend typiquement une électrode positive, une électrode négative et un électrolyte, notamment imprégnant une membrane poreuse séparant lesdites électrodes.

L'électrode de référence selon l'invention est ainsi intégrée en tant que troisième électrode à la cellule de la batterie métal-ion, de la batterie lithium-soufre ou lithium-air, ou du supercondensateur.

Une cellule d'une batterie métal-ion, d'une batterie lithium-soufre ou lithium-air, ou d'un supercondensateur selon l'invention est ainsi un système à trois électrodes, comportant plus particulièrement :
- une électrode positive ;
- une électrode négative ; et
- ladite électrode de référence selon l'invention, en particulier préparée comme décrit précédemment.

La nature des éléments constituant la cellule d'une batterie métal-ion, d'une batterie lithium-soufre ou lithium-air, ou d'un supercondensateur, en particulier des électrodes positive et négative et de l'électrolyte, dépend bien entendu du type de dispositif considéré, suivant qu'il s'agisse d'une batterie métal-ion, d'une batterie lithium-soufre, lithium-air, d'un supercondensateur, etc.

Le ou lesdits matériau(x) actif(s) de l'électrode négative peu(ven)t être notamment choisi(s) parmi du carbone activé, des matériaux carbonés d'intercalation d'un élément alcalin tel que du graphite ; du silicium ; des matériaux de conversion du type MO₂ avec M représentant par exemple Sn (SnO₂), Si (SiO₂), ou du type M₃O₄ avec M représentant par exemple Co (Co₃O₄), Mn (Mn₃O₄) etc., des métaux (Li, Na, K, Mg, Ca) et alliages à base de ces métaux, des oxydes de titane de type Li₄Ti₅O₁₂.

Le ou lesdits matériau(x) actif(s) de l'électrode positive peu(ven)t être notamment choisi(s) parmi du carbone activé, du LiMO₂ ou LiM₂O₄ avec M représentant Mn, Co, Ni ou l'une de leurs combinaisons ; du LiMPO₄ avec M représentant Fe, Mn ou une de leurs combinaisons.

L'exemple qui suit, en référence à la mise en oeuvre d'une électrode de référence selon l'invention au niveau d'une cellule d'un supercondensateur au potassium, est ainsi donné uniquement à titre illustratif de l'invention, étant entendu que l'utilisation d'une électrode de référence n'est aucunement limitée à ce mode particulier de mise en oeuvre.

Ainsi, à titre d'exemple de mise en oeuvre, une électrode de référence selon l'invention est introduite au niveau d'un supercondensateur, en particulier d'un supercondensateur hybride, par exemple un supercondensateur hybride au potassium.

Une électrode de référence selon l'invention peut être par exemple mise en oeuvre au niveau d'une cellule d'un supercondensateur au potassium comportant par ailleurs :
- une électrode positive à base de carbone activé ;
- une électrode négative, à base de carbone activé dans le cas d'un supercondensateur standard, ou à base d'un matériau carboné d'intercalation d'un élément alcalin, en particulier à base de graphite, dans le cas d'un supercondensateur hybride ; et
- un électrolyte comprenant au moins un sel de potassium, par exemple du KPF₆, dans un ou plusieurs solvants organiques, par exemple de type nitrile, en particulier dans l'acétonitrile. Lesdites électrodes positive et négative de la cellule du supercondensateur peuvent être par exemple telles que décrites dans la demande FR 3 005 199.

Il est entendu que les différents éléments sont assemblés au sein de la cellule de la batterie ou du supercondensateur, de sorte, d'une part, à permettre une utilisation efficace de l'électrode de référence, par exemple à des fins de connaître les potentiels des électrodes positive et négative et, d'autre part, de sorte que la présence de cette troisième électrode n'interfère pas négativement au niveau du fonctionnement de la cellule de ladite batterie ou dudit supercondensateur.

En particulier, l'électrode de référence peut être utilisée lorsque la cellule de ladite batterie ou dudit suprcondensateur est soumise à un cyclage pour des courants allant de C/2 à 100C, en particulier de C/2 à 5C, à des températures allant de -40°C à 100°C.

D'une manière générale, les différentes électrodes de la cellule de la batterie ou du supercondensateur sont séparées les unes des autres par une membrane poreuse, dite encore « séparateur », imprégnée par l'électrolyte.

De tels séparateurs poreux peuvent être par exemple en polyéthylène, en polypropylène.

La cellule de la batterie métal-ion, de la batterie lithium-soufre ou lithium-air, ou du supercondensateur selon l'invention peut présenter avantageusement une configuration de couches superposées. Autrement dit, l'assemblage de la cellule peut être réalisé par empilement des différents éléments sous la forme de couches.

Chacune des électrodes d'une cellule de la batterie ou du supercondensateur selon l'invention peut se présenter sous la forme d'une couche du matériau d'électrode, déposée sur au moins l'une des faces ou sur les deux faces d'un collecteur de courant se présentant sous la forme d'un film mince, par exemple sous la forme d'un feuillard métallique.

Selon une variante de réalisation, dans le cas d'une architecture de la cellule de la batterie métal-ion, de la batterie lithium-soufre ou lithium-air, ou du supercondensateur sous la forme d'un empilement des différents éléments, l'électrode de référence peut être positionnée entre les électrodes positive et négative.

La Figure 1 représente, de manière schématique, en coupe transversale, un exemple d'assemblage 100 des différents éléments, intégrant une électrode de référence selon l'invention, au sein d'une cellule d'une batterie métal-ion, d'une batterie lithium-soufre ou lithium-air, ou d'un supercondensateur, à l'image par exemple de la cellule d'un supercondensateur.

Comme représenté sur cette figure, dans une variante de réalisation, une cellule d'une batterie métal-ion, d'une batterie lithium-soufre ou lithium-air, ou d'un supercondensateur selon l'invention, par exemple d'un supercondensateur au potassium, peut comporter l'assemblage 100 des différents éléments suivants, dans cet ordre d'empilement :
- une électrode positive 22, en particulier formée d'une couche simple ou double couche de matériau actif 220, par exemple à base de carbone activé dans le cas d'un supercondensateur, sur un collecteur de courant 221, par exemple en aluminium ;
- un séparateur poreux 24, par exemple en polypropylène, destiné à être imprégné par l'électrolyte ;

- ladite électrode de référence 21, en particulier préparée comme décrit précédemment, formée d'une couche 211 du matériau d'électrode à base du ou desdits matériaux organiques de type P sous une forme partiellement oxydée, au niveau d'un collecteur de courant 212, par exemple en aluminium revêtue de carbone ;
- un séparateur poreux 24, par exemple en polypropylène, destiné à être imprégné par l'électrolyte ; et
- une électrode négative 23, en particulier formée d'une couche de matériau actif 231, par exemple à base de carbone activé dans le cas d'un supercondensateur standard, ou à base d'un matériau carboné d'intercalation d'au moins un élément alcalin, par exemple à base de graphite, dans le cas d'un supercondensateur hybride, sur un collecteur de courant 232, par exemple en aluminium.

Au sein de la cellule de la batterie métal-ion, de la batterie lithium-soufre ou lithium-air, ou du supercondensateur, l'assemblage est trempé par un électrolyte comportant au moins un sel de métal alcalin ou alcalino-terreux, par exemple un sel de potassium dans le cas d'un supercondensateur au potassium, dans un ou plusieurs solvants aqueux ou organiques.

Les séparateurs poreux assurent une isolation électronique entre les électrodes, tout en permettant un passage facile des ions de l'électrolyte.

L'électrode de référence 21, intercalée au sein de l'assemblage entre les électrodes positive 22 et négative 23, présente avantageusement une surface dans un plan orthogonal à la direction d'empilement des différents éléments (électrodes et séparateurs), réduite comparativement aux surfaces des électrodes positive et négative dans ce même plan. De préférence, l'aire projetée de l'électrode de référence dans un plan orthogonal à la direction d'empilement, ne dépasse pas 10 %, en particulier 5 %, de l'aire projetée dans ce même plan des électrodes positive et négative.

L'invention n'est pas limitée à l'agencement représenté en figure 1. D'autres assemblages peuvent être considérés, pour autant qu'ils permettent d'assurer à la fois le fonctionnement de la cellule de la batterie métal-ion, de la batterie lithium-soufre ou lithium-air, ou du supercondensateur et l'utilisation de l'électrode de référence. Des exemples de configuration de cellules à trois électrodes sont par exemple décrits dans le document US 9,379,418. Une cellule d'une batterie métal-ion, d'une batterie lithium-soufre ou lithium-air, ou d'un supercondensateur selon l'invention peut être conditionnée dans un format prismatique ou cylindrique. Dans le format prismatique, l'assemblage est de préférence conditionné dans un emballage capable d'empêcher une contamination par l'air ou l'eau de la cellule.

Dans un mode de réalisation particulier, une cellule d'une batterie métal-ion, d'une batterie lithium-soufre ou lithium-air, ou d'un supercondensateur selon l'invention peut être conditionnée dans un format prismatique, et en particulier sous la forme d'une « pouch cell » comme illustré dans les exemples. Une telle cellule « pouch cell » présente notamment un emballage flexible en aluminium-plastique.

Une batterie métal-ion, une batterie lithium-soufre ou lithium-air, ou un supercondensateur selon l'invention, peut comprendre au moins une cellule selon l'invention intégrant une électrode de référence.

De manière avantageuse, la différence de potentiel entre l'électrode positive (respectivement, l'électrode négative) et l'électrode de référence permet de mesurer et de surveiller le potentiel de l'électrode positive (respectivement, l'électrode négative), par rapport à une valeur connue de potentiel, pendant le fonctionnement du supercondensateur. Les branchements et circuits électriques externes à l'assemblage ne sont pas représentés sur les figures.

Le circuit externe entre l'électrode positive (respectivement, l'électrode négative) et l'électrode de référence peut être connecté électriquement à un moniteur de tension pour permettre d'indiquer ou d'enregistrer le potentiel de l'électrode positive (respectivement, l'électrode négative).

Les potentiels des électrodes positive et négative peuvent être surveillés simultanément ou non, de manière continue, périodique, aléatoire ou à des moments prédéterminés, au cours du fonctionnement de la batterie ou du supercondensateur.

Il est entendu que l'ensemble des caractéristiques décrites pour l'électrode de référence et pour les différents éléments d'une cellule de la batterie métal-ion, de la batterie lithium-soufre ou lithium-air, ou du supercondensateur s'applique à la cellule de la batterie métal-ion, de la batterie lithium-soufre ou lithium-air, ou du supercondensateur, à la batterie métal-ion, à la batterie lithium-soufre ou lithium-air, ou au supercondensateur et aux utilisations revendiqués selon l'invention.

L'invention va maintenant être décrite au moyen des figures et exemples suivants, donnés bien entendu à titre illustratif et non limitatif de l'invention.

### EXEMPLE 1

### Préparation d'une électrode de référence selon l'invention

### 1.1. Préparation d'une électrode à base de PTMA

Une électrode à base de PTMA est préparée comme décrit dans la demande FR3107614.

### Synthèse du polymère organique rédox de type poly(2,2,6,6-tetraméthyl-pipéridenyloxyl-4-yl méthacrylate) réticulé (PTMA)

10 g de 2,2,6,6-tétraméthyl-4-pipéridylméthacrylate sont polymérisés à 60°C en présence de réticulant (∼1% en masse d'éthylène glycol diméthacrylate) dans 60 mL de tétrahydrofurane (THF) en utilisant l'azobisisobutyronitrile (AIBN, 0,15% en masse) comme catalyseur. Le gel obtenu est séché puis introduit dans 500 mL de dichlorométhane (CH₂Cl₂) avant d'être oxydé avec l'acide 3-chloroperbenzoique (mCPBA, 2 équivalents). Après neutralisation avec une solution de carbonate de sodium et lavage à l'eau, le solvant est évaporé conduisant à l'obtention d'un polymère (noté PTMA) sous forme d'un solide rouge qui est broyé et lavé dans un dispositif de type Soxhlet avec 200 mL de diméthylcarbonate.

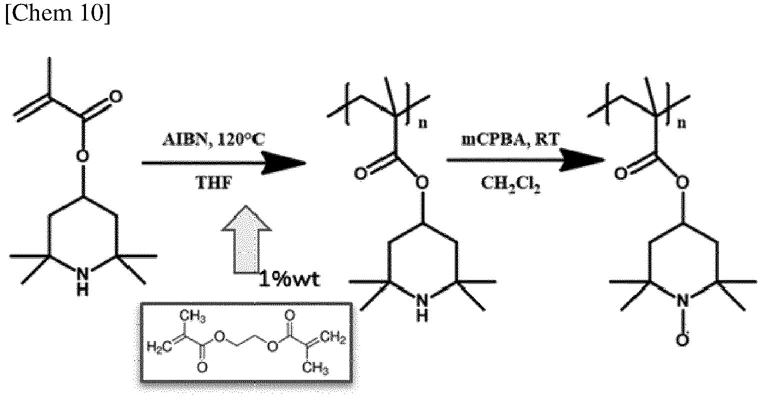

### Préparation d'un composite PTMA/noir de carbone

Un composite PTMA/KB600 est préparé suivant le procédé décrit dans la demande FR3107614.

Plus particulièrement, 4 g du PTMA synthétisé comme décrit ci-dessus, sont introduits dans 150 mL de dichlorométhane, auquel 1 g de noir de carbone (Ketjen Black EC600J) sont ajoutés. La suspension est agitée pendant 2 heures puis séchée à 60°C en étuve afin d'éliminer le solvant. Ensuite, le solide obtenu est broyé dans un bol en agate contenant 3 grosses billes de diamètre 25 mm pendant 1 heure à 300 rpm. Une poudre noire est obtenue.

### Préparation de l'électrode à base du composite PTMA/noir de carbone

Une formulation aqueuse comprenant 90 % en masse du matériau composite PTMA/KB600 préparé ci-dessus, 5 % en masse de noir de carbone Super P^{®} et 5 % en masse de carboxyméthylcellulose (CMC) est préparée et enduite sur un feuillard en aluminium. Après séchage à 55°C pendant une nuit, les électrodes à base de PTMA sont séchées sous vide pendant 48 heures.

### 1.2. Préparation de l'électrode de référence par oxydation partielle du PTMA avec compensation de charge anionique

Comme représenté schématiquement en figure 2, l'électrode à base de PTMA est ensuite montée au sein d'une pile bouton face à une contre-électrode positive de lithium métal. L'électrolyte est un mélange de solvants carbonates comprenant notamment du carbonate de diméthyle (DMC) et du sel LiPF₆ (1M).

L'électrode de référence est préparée en procédant à une charge complète de ladite cellule à un régime de C/5 jusqu'à 4 V, au cours de laquelle, les charges positives créées du fait de l'oxydation du PTMA sont compensées par des anions PF₆⁻. Puis le système est déchargé partiellement (réduction partielle du PTMA) au même régime jusqu'à atteindre le plateau de potentiel de 3,6 V *vs* Li/Li⁺.

Alternativement, l'électrode de référence peut être préparée en procédant directement à une charge partielle de la demi-pile bouton, jusqu'au plateau de potentiel de 3,6 V *vs* Li/Li⁺, au cours de laquelle les charges positives créés du fait de l'oxydation partielle du PTMA sont compensées par des anions PF₆⁻.

Après avoir atteint le plateau de potentiel, la cellule est maintenue en circuit ouvert pendant plusieurs heures afin de vérifier la stabilité du potentiel de l'électrode.

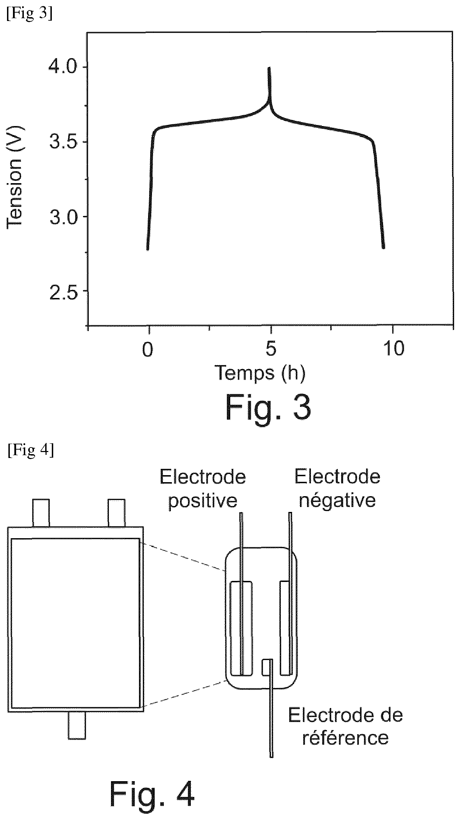

La figure 3 représente le profil de charge/décharge galvanostatique à C/5 de la pile Li métal/PTMA dans le cas d'un cycle de charge/décharge complet. Le profil de charge/décharge galvanostatique confirme l'existence d'un plateau de potentiel à 3,6 V *vs* Li/Li⁺.

Dans un second temps, la cellule est démontée en boite à gants pour récupérer l'électrode de référence à base PTMA sous forme partiellement oxydée. Celle-ci est rincée au carbonate de diméthyle (DMC).

### EXEMPLE 2

### Mise en oeuvre de l'électrode de référence au niveau de la cellule d'un supercondensateur hybride au potassium (KIC)

L'électrode de référence à base PTMA sous forme partiellement oxydée et dont les charges positives sont compensées par des anions PF₆⁻, préparée comme décrit en exemple 1, est introduite au niveau d'une cellule d'un système de type supercondensateur hybride au potassium.

La réalisation du montage à trois électrodes est effectuée au format « pouch cell », à partir des électrodes suivantes :
- l'électrode de référence selon l'invention, préparée comme décrit en exemple 1 et découpée au format 5 mm × 10 mm ;
- une électrode positive à base de carbone activé.

L'électrode positive est achetée chez Samwha Capacitor Group et utilisée telle que reçue. Il s'agit d'une électrode enduite sur un collecteur en aluminium non gravé de 20 µm, et dont la composition est la suivante : 91 % de carbone activé ; 3 % d'additif conducteur SuperC65 et 6 % de liant PVDF. - une électrode négative à base de graphite.

L'électrode négative est préparée par enduction, sur un collecteur en aluminium gravé de 30 µm d'épaisseur, d'une composition comprenant : 75,5 % de graphite de référence SMG-HE2 (obtenu auprès de Hitachi) 11,5 % de graphite de référence SFG6 (obtenu auprès de Timcal Co., Suisse) ; 10 % de noir de carbone de référence SuperC65 (obtenu auprès de Timcal Co., Suisse) ; 2 % d'un caoutchouc styrène-butadiène (obtenu auprès de BASF, 2427); 1 % de carboxyméthylcellulose (obtenue auprès de Ashland, 7HXF), les pourcentages étant des pourcentages massiques exprimés par rapport à la masse totale de l'électrode hormis le collecteur de courant.

Les électrodes positive et négative sont séchées à 55 °C puis découpées au format 35 mm × 35 mm.

L'assemblage de la cellule dans un emballage flexible en aluminium-plastique est réalisé en empilant les éléments dans l'ordre suivant :
1. l'électrode positive en carbone activé ;
2. un séparateur en polypropylène (PDA25^{®} de Treofan GmbH, Allemagne ;
3. l'électrode de référence ;
4. un séparateur en polypropylène ;
5. l'électrode négative en graphite.

Après un séchage à 55°C en étuve, l'activation de la cellule est réalisée en boite à gants en ajoutant 450 µL d'électrolyte à base d'acétonitrile et du sel KPF₆ (1M).

Après l'ajout de l'électrolyte, l'emballage est scellé hermétiquement sous vide.

La figure 4 représente schématiquement la cellule au format pouch-cell du supercondensateur au potassium ainsi obtenue.

### EXEMPLE 3

### Utilisation de l'électrode de référence pour le suivi des potentiels des électrodes positive et négative lors de différentes étapes de formation d'un supercondensateur hybride au potassium

La mise en oeuvre du montage à trois électrodes tel que décrit en exemple 2 permet de mesurer la tension de la cellule du supercondensateur hybride au potassium *via* un branchement entre les électrodes négative et positive ; et de calculer les potentiels respectifs des électrodes positive et négative de la cellule du supercondensateur hybride au potassium *via* un branchement entre l'électrode de référence et l'électrode positive ou négative.

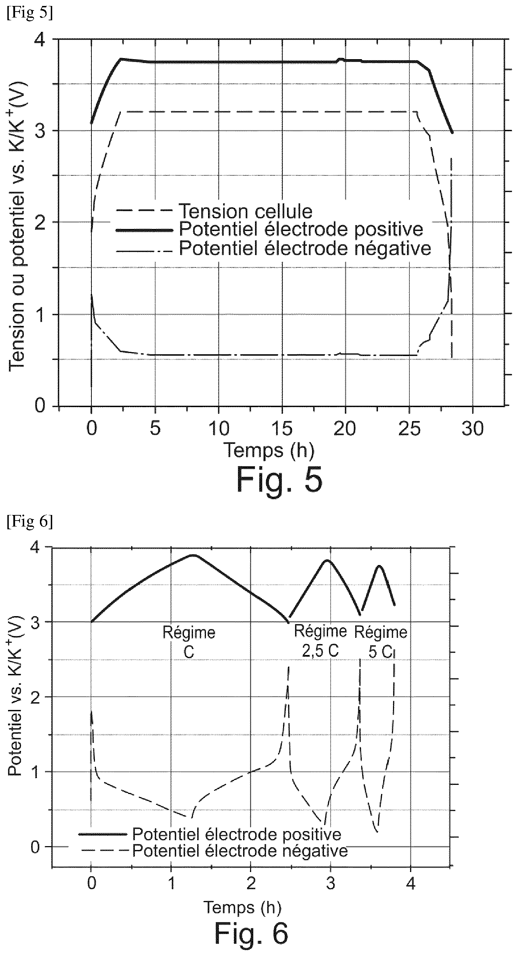

Par exemple, la figure 5 présente l'évolution de la tension de cellule et des potentiels des électrodes négative et positive pour la cellule de supercondensateur hybride au potassium préparée en exemple 2 lors des différentes étapes de formation d'un supercondensateur hybride au potassium suivant le procédé décrit dans la demande déposée en France sous le numéro FR2109574 : charge à C/2 jusqu'à 3,2 V, maintien pendant 24 heures à la tension de 3,2 V et décharge à C/2 jusqu'à 0,5 V.

### EXEMPLE 4

### Utilisation de l'électrode de référence pour réaliser le suivi des potentiels des électrodes positive et négative dans un système supercondensateur hybride au potassium

Les potentiels des électrodes positive et négative dans la cellule à trois électrodes préparée en exemple 2 sont suivis lors d'un cyclage à un régime de C ; 2,5 C et 5 C.

La figure 6 présente l'évolution des potentiels des électrodes positive et négative aux différents régimes.

### Références

[1] Cengiz et al., J. Electrochem. Soc. 2021 ;
[2] Nakahara et al., Chemical Physics Letters 359 (2002), 351-354 ;
[3] Dolphijn et al., Polymers, vol. 13, n°6, Art. n°6, janv. 2021 ;
[4] Liu et al., Russ. J. Electrochem. Vol. 48, n°11, p.1052-1057, nov. 2012 ;
[5] Kim et al., Journal of Industrial and Engineering Chemistry, vol. 14, n°3, p. 371-376, mai 2008 ;
[6] Zhou et al., Journal of Power Sources, vol. 483, p. 229136, janv. 2021 ;
[7] Wang et al., Nature Mater., vol. 18, n°1, p. 69-75, janv. 2019 ;
[8] Poizot et al., Chem. Rev. https://dx.doi.org/10.1021/acs.chemrev.9b00482

## Revendications

1. Utilisation, à titre d'électrode de référence dans une cellule d'une batterie métal-ion, notamment une batterie sodium-ion, lithium-ion, potassium-ion, magnésium-ion ; une batterie lithium-soufre ou lithium-air ; ou d'un supercondensateur, en particulier d'un supercondensateur hybride au potassium, d'une électrode à base d'un ou plusieurs matériaux organiques électro-actifs de type P, dont la réaction rédox associée présente un potentiel électrochimique constant ; le ou lesdits matériaux organiques de type P étant présents sous une forme partiellement oxydée chargée positivement, avec une compensation de charge par au moins un anion.

2. Utilisation selon la revendication précédente, dans laquelle le ou lesdits matériaux organiques de type P sont choisis parmi :
des composés, en particulier des molécules, oligomères ou polymères, porteurs de fonctions rédox choisies parmi :
- des radicaux stables O^{•}, N^{•} ou NO^{•}, en particulier des fonctions nitroxyde (NO*) ou phénoxy (PhO*) ; tels que par exemple des polymères porteurs de groupements latéraux de structure 2,2,6,6-tétraméthylpipéridinyl-N-oxy (TEMPO) ;
- des fonctions éther (-O-) ou thioéther (-S-) conjuguées ; tels que le thianthrène, la phénothiazine, et leurs dérivés de type oligomères ou polymères; les polymères conducteurs π-conjugués de type polythiophène (PT), par exemple le poly(3,4-éthylènedioxythiophène) ;
- des fonctions amines conjuguées, notamment des groupes amines aromatiques ou de type hétéroaryle, tels que la dianiline, la triphénylamine, la polyaniline ou le polypyrrole, des molécules de type viologène ou carbazole, les polyviologènes et polycarbazoles ; et d'autres polymères conducteurs π-conjugués, tels que les polyacétylènes.

3. Utilisation selon la revendication 1 ou 2, dans laquelle le ou lesdits matériaux organiques de type P sont choisis parmi des polymères, de préférence réticulés, porteurs de groupements latéraux possédant une ou plusieurs fonctions nitroxyde, par exemple porteurs de groupements latéraux de structure 2,2,6,6-tétraméthylpipéridinyl-N-oxy (TEMPO).

4. Utilisation selon l'une quelconque des revendications précédentes, dans laquelle ledit matériau organique de type P est un poly(2,2,6,6-tétraméthylpipéridinyloxy-4-yl méthacrylate), noté PTMA.

5. Utilisation selon l'une quelconque des revendications précédentes, dans laquelle ladite électrode de référence comprend le ou lesdits matériau(x) organique(s) de type P sous la forme d'un matériau composite particulaire associant le ou lesdits matériaux organiques de type P et un ou plusieurs matériaux nanostructurés conducteurs électroniques, notamment carbonés.

6. Utilisation selon l'une quelconque des revendications précédentes, dans laquelle ladite électrode de référence comprend, outre le ou lesdits matériau(x) organique(s) de type P sous forme partiellement oxydée, un ou plusieurs additifs conducteurs électroniques, en particulier choisis parmi des fibres de carbone, du noir de carbone, des nanotubes de carbone et leurs mélanges, et éventuellement un ou plusieurs liants, en particulier un ou plusieurs liants polymères, notamment choisis parmi les polymères fluorés, par exemple parmi le polytétrafluoroéthylène (PTFE), le polyfluorure de vinylidène (PVDF), les polymères dérivés de carboxyméthylcellulose, les polysaccharides et les latex notamment de type caoutchouc styrène-butadiène.

7. Utilisation selon l'une quelconque des revendications précédentes, dans laquelle ladite électrode de référence est préparée, préalablement à son utilisation dans ladite cellule, à partir d'une électrode à base du ou desdits matériaux organiques de type P, par oxydation partielle du ou desdits matériaux organiques de type P avec une compensation des charges positives crées lors de l'oxydation par insertion d'anions, permettant d'obtenir le potentiel électrochimique constant.

8. Utilisation selon la revendication précédente, dans laquelle ladite électrode de référence est obtenue *via* les étapes suivantes :
(i) fourniture d'une cellule électrochimique, comprenant ladite électrode à base du ou desdits matériau(x) organique(s) de type P comme électrode de travail, une contre-électrode ; et un électrolyte à base d'au moins un sel ionique ; et
(ii) oxydation de l'électrode de travail de ladite cellule dans des conditions adaptées pour atteindre un plateau de potentiel.

9. Utilisation selon l'une quelconque des revendications précédentes, dans laquelle la charge positive du ou desdits matériaux organiques de type P sous forme partiellement oxydée est compensée par un ou plusieurs anions monovalents ou polyvalents, en particulier choisis parmi des anions organiques, tels que [N(SO₂CF₃)₂]⁻ (TFSI⁻), [N(SO₂F)₂]⁻ (FSI⁻), 4,5-dicyano-2-(trifluorométhyl)imidazole (également noté TDI), RCOO⁻où R est une chaîne hydrocarbonée, HCOO⁻, et des anions inorganiques tel que PF₆⁻, BF₄⁻, ClO₄⁻, F⁻, Cl⁻, Br⁻, I⁻, NO₃⁻ et HSO₄⁻ ; de préférence le ou lesdits anions étant de même nature que le ou lesdits anions entrant dans la composition du ou desdits sels de l'électrolyte de ladite cellule du système de stockage électrochimique.

10. Utilisation selon l'une quelconque des revendications précédentes, dans laquelle le ou lesdits matériaux organiques de type P sous leur forme partiellement oxydée chargée positivement représentent de 5 à 95 % massique, en particulier de 30 à 70 % massique et plus particulièrement de 40 à 60 % massique, par rapport à la masse totale de matériau(x) de type P présent(s) dans l'électrode.

11. Utilisation selon l'une quelconque des revendications précédentes, pour connaître les potentiels d'au moins l'une des électrodes positive et négative, de préférence de chacune des électrodes positive et négative de ladite cellule du système de stockage électrochimique, en particulier pour suivre l'évolution des potentiels d'au moins l'une des électrodes positive et négative au cours du fonctionnement dudit système.

12. Cellule d'une batterie métal-ion, notamment une batterie sodium-ion, lithium-ion, potassium-ion, magnésium-ion ; une batterie lithium-soufre ou lithium-air ; ou d'un supercondensateur, en particulier d'un supercondensateur hybride au potassium,comportant trois électrodes :
- une électrode positive ;
- une électrode négative ; et
- une électrode de référence à base d'un ou plusieurs matériaux organiques électro-actifs de type P, dont la réaction rédox associée présente un potentiel électrochimique constant ; le ou lesdits matériaux organiques de type P étant présents sous une forme partiellement oxydée chargée positivement, avec une compensation de charge par au moins un anion, ladite électrode de référence étant en particulier telle que définie dans l'une quelconque des revendications 2 à 10.
